# EUROPEAN PATENT SPECIFICATION

(11) **EP 1 638 325 B1**
(45) Date of publication and mention of the grant of the patent: **09.04.2008**
(21) Application number: 05255317.9
(22) Date of filing: 31.08.2005
(51) Int. Cl.: G11B 27/36, H04N 5/782

(54) **Automatically limiting settable recording time**
Automatische Begrenzung der einstellbaren Aufzeichnungszeit
Limiter le temps d'enregistrement

(30) Priority: 20.09.2004 KR 2004075007
(43) Date of publication of application: 22.03.2006
(73) Proprietor: Samsung Electronics Co., Ltd., Suwon-si, Gyeonggi-Do (KR)
(72) Inventor: Kim, Jin-hwi 107-503, Hyundai I-park, Suwon-si Gyeonggi-do (KR)
(74) Representative: Robinson, Ian Michael

(56) References cited:
- WO-A-03/091928
- US-A1- 2002 172 496
- US-A1- 2004 126 090
- PATENT ABSTRACTS OF JAPAN vol. 2002, no. 12, 12 December 2002 (2002-12-12) & JP 2002 222586 A (SONY CORP), 9 August 2002 (2002-08-09)
- PATENT ABSTRACTS OF JAPAN vol. 2003, no. 12, 5 December 2003 (2003-12-05) & JP 2003 324684 A (TOSHIBA CORP), 14 November 2003 (2003-11-14)

## Description

The present invention relates to a recording apparatus, and more specifically, to a recording apparatus to record an input video on a recording medium.

WO 03/091928 A (THOMSON LICENSING S.A; LIEBHOLD, VALERIE, SACREZ; STUART, ANTHONY, EDW) 6 November 2003 (2003-11-06) discloses calculating the remaining recording capacity in dependence of anticipated bit rate. If no sufficient recording capacities are available, the recording time is set to said remaining capacity, if the user approves this.

A recording apparatus records an input video on a recording medium. A typical example of the recording apparatus is a video cassette recorder (VCR).

Most VCRs coming to the market use a one-touch recording (OTR) feature. The OTR feature facilitates the recording for a recording time specified by a user. When the recording time is not specified, the recording is continue (i.e., continuously performed).

The OTR feature allows a user to use a recording button alone to set either a desired recording time or a continuous recording function which records with the recording time unspecified. While the VCR is stopped, the selection of the recording button sets the continuous recording. One more selection of the recording button sets 30-minute recording (hereinafter, referred to as a 0:30 recording). Further selection of the recording button sets 1:00 recording. Subsequently, following selections of the recording button recursively set 1:30 recording → 2:00 recording → 2:30 recording → ... → 6:00 recording → continuous recording → 0: 30 recording → ..., and so forth.

As the OTR feature facilitates the selection of the desired recording time or the continuous recording via the single recording button, the user enjoys increased convenience of recording.

To execute the recording for the recording time fixed by the user, there should be unoccupied recording area corresponding to the fixed recording time on a recording medium such as a VCR tape. However, not knowing whether there is a sufficient unoccupied recording area on the recording medium, the user cannot consider the unoccupied recording area at all when setting the recording time.

As a result, the unoccupied recording area equivalent to the set recording time may be insufficient to record the entire input video that the user wants to record. This deficiency causes less than the entire input video to be recorded.

The invention is as set out in claims 1 and 6.

According to the present invention there is provided an apparatus and method as set forth in the appended claims. Preferred features of the invention will be apparent from the dependent claims, and the description which follows.

An aspect of the present invention provides a recording apparatus to automatically limit a settable recording time to below a recordable time of a recording medium, and a method to limit the application recording time.

In one aspect of the present invention, there is provided a recording apparatus for recording an input video on a recording medium, including: a calculator calculating a recordable time of the recording medium; a manipulator setting a recording time; an on-screen display (OSD) processor OSD processing information; and a controller controlling recording of the input video with the recording time unspecified and controlling the OSD processor to OSD-process information indicating the unspecified recording time when the recording time exceeds the recordable time.

The recording time may be set according to a one-touch record (OTR) feature.

The calculator may calculate the recordable time based on a recording area of the recording medium and a predetermined recording speed.

The recording medium may be one of an optical recording medium, a magnetic recording medium, a semiconductor recording medium, a compact disk (CD), a digital video disk (DVD), a hard disk drive (HDD), a tape, and a memory card.

According to another aspect of the present invention, there is provided a method for automatically limiting a recording time at a recording apparatus that records an input video on a recording medium, including: calculating a recordable time of the recording medium; setting a recording time; and recording the input video with the recording time unspecified, and on-screen display (OSD)-processing information indicating that the unspecified recording time when the recording time exceeds the recordable time.

The recording time may be set according to a one-touch record (OTR) feature.

The recordable time may be calculated based on a recording area of the recording medium and a predetermined recording speed.

The recording apparatus may be an optical recorder, a magnetic recorder, a semiconductor recorder, a compact disk recorder (CDR), a digital disk recorder (DVDR), a hard disk drive (HDD) recorder, a video cassette recorder (VCR), or a memory card recorder.

According to another aspect of the present invention, there is provided a recording apparatus, including: a user interface to receive a recording duration command; a recorder recording a received input video onto a loaded recording medium; a calculator calculating an available recording time of the recording medium; an on-screen display (OSD) processor generating and OSD-processing information to be displayed; and a controller controlling the recorder and the OSD processor so that, when the recording duration exceeds the available recordable time, the recorder continuously records the input video with an unspecified duration and information indicating the continuous recording is OSD-processed.

According to another aspect of the present invention, there is provided a recording method, including: recording a received input video onto a loaded recording medium in response to a received recording duration command; calculating an available recording time of the recording medium; generating and OSD-processing text information to be displayed; and controlling a recorder and an OSD processor so that, when the recording duration exceeds the available recordable time, the recorder continuously records the input video with an unspecified duration and information indicating the continuous recording is OSD-processed.

Additional and/or other aspects and advantages of the present invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 is a block diagram of a recording apparatus to automatically limit a settable recording time according to an embodiment of the present invention;
Figure 2 is a flowchart of operations to automatically limit the settable recording time at the recording apparatus as shown in Figure 1;
Figure 3A through Figure 3E are TV screens showing OSD-processed information.

Reference will now be made in detail to embodiments of the present invention, examples of which are illustrated in the accompanying drawings, wherein like reference numerals refer to the like elements throughout. The embodiments are described below in order to explain the present invention by referring to the figures.

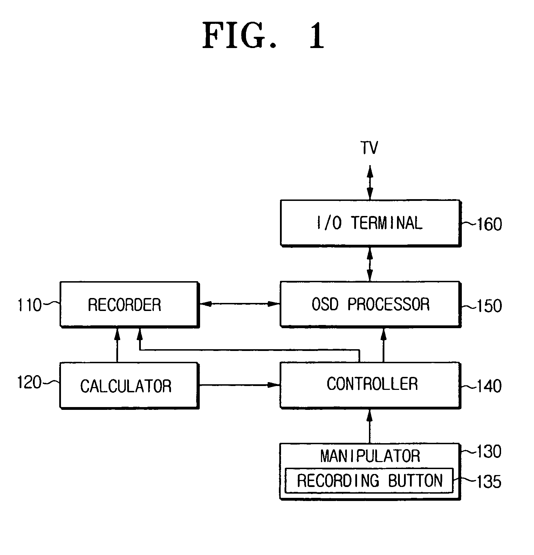

Figure 1 is a block diagram of a recording apparatus for automatically limiting a settable recording time according to an embodiment of the present invention.

Initially, it is to be understood that various recording apparatuses can be used in the present embodiment.

The recording apparatus records an input video on a recording medium. Non-limiting examples of various types of recording apparatuses include an optical recording apparatus, a magnetic recording apparatus, a semiconductor recording apparatus, and the like. Non-limiting examples of an optical recording apparatus include a compact disk recorder (CDR) and a digital video disk recorder (DVDR). Non-limiting examples of a magnetic recording apparatus include a hard disk driver (HDD) recorder and a video cassette recorder (VCR). A non-limiting example of a semiconductor recording apparatus is a memory card recorder.

Referring now to Figure 1, the recording apparatus according to an embodiment of the present invention includes a recorder 110, a calculator 120, a manipulator 130, a controller 140, an on-screen display (OSD) processor 150, and an input and output (I/O) terminal 160.

The recorder 110 records an input video, which is received from, by way of a non-limiting example, a TV being an external device through the I/O terminal 160, explained in detail below, on a loaded recording medium (not shown). As various recording apparatuses may be used in the present embodiment, various recording media can be loaded in the recorder 110. Non-limiting examples of the various recording media include an optical recording medium such as a CD, a DVD, a magnetic recording medium such as a HDD, a tape, and a semiconductor such as a memory card.

The calculator 120 calculates a recordable time of the recording medium loaded in the recorder 110. The recordable time is a time period converted from a length of the input video recordable on the recording medium. The calculator 120 calculates the recordable time based on a recording area of the recording medium and a predetermined recording speed. Accordingly, as the recording speed varies with the recordable area fixed, the recordable time obtained at the calculator 120 also changes. Alternatively, the controller 140, explained in detail below, may perform the calculation instead of the calculator 120. In this case, the calculator 120 can be omitted.

The manipulator 130 is a user interface to forward a user's manipulation command to the controller 140 in a manner described below. The manipulator 130 may be realized by a manipulation panel provided at the front part of the recording apparatus and a remote controller operable from a distance.

The manipulator 130 is used to set a desired recording time. The user utilizes a recording button 135 provided at the manipulator 130 to set his/her desired recording time or a continuous recording according to one-touch record (OTR) feature.

The OSD processor 150 creates and OSD-processes text information to be displayed on a TV screen. The I/O terminal 160 is connected with an external device such as a TV.

The controller 140 controls the recording at the recorder 110 and the OSD processing at the OSD processor 150. When the recording time set through the manipulator 130 exceeds the recordable time calculated at the calculator 120, the controller 140 controls to record the input video with the recording time unspecified, that is, to set a continuous recording. In this situation, the controller 140 controls the OSD processor 150 to OSD-process information indicating that the unspecified recording time, that is, the continuous recording.

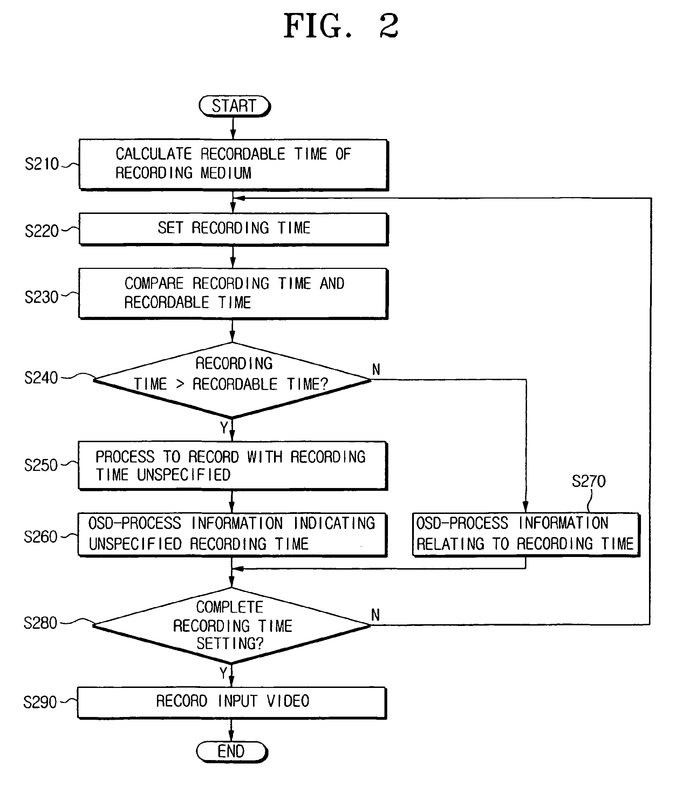

In the following description, a method of limiting the settable recording time at the recording apparatus is illustrated in reference to Figure 2. Figure 2 is a flowchart explaining operations to automatically limit a settable recording time at a recording apparatus. The method of Figure 2 can be performed by the apparatus of Figure 1 and is, for ease of explanation only, described in conjunction with the apparatus of Figure 1. However, it is to be understood that the method of Figure 2 can be performed by apparatuses of other configurations and vice versa.

The calculator 120 calculates the recordable time of the recording medium loaded in the recorder 110 (S210). The user specifies a desired recording time by use of the recording button 135 of the manipulator 130 according to the OTR feature (S220). The calculated recordable time at operation S210 and the set recording time at operation S220 are provided to the controller 140. Note that operations S210 and S220 may be changed with each other.

The controller 140 compares the recording time and the recordable time (S230). When it is determined that the recording time exceeds the recordable time (S240), the controller 140 processes to record with the recording time unspecified, that is, to set the continuous recording (S250). This is because the entire input video cannot be recorded on the recording medium for the recording time set at operation S220.

The controller 140 controls the OSD processor 150 to OSD-process the information indicating the unspecified recording time, that is, indicating the continuous recording (S260). The OSD-processed information is displayed on the TV screen. Thus, upon seeing the OSD-processed information on the TV screen, the user can perceive that it is impossible to record the entire input video for the recording time set at operation S220, and obtain the recordable time of the recording medium.

By contrast, when it is determined that the recording time is below (i.e., less than) the recordable time (S240), the controller 140 keeps the specified recording time and controls the OSD processor 150 to OSD-process the information relating to the specified recording time (S270).

Next, when the completion of the recording time setting is determined (S280), the controller 140 controls the recorder 110 to record the input video on the recording medium according to the specified recording time at operation S220 or the unspecified recording time at operation S250 (S290). If the recording button 135 of the manipulator 130 is not selected within a certain time, it is regarded that the recording time setting is finished.

Otherwise, when the incompletion of the recording time setting is determined (S280), operations S220 through S270 are repeated. If the recording button 135 of the manipulator 130 is selected within the certain time, it is regarded that the recording time setting is not finished yet.

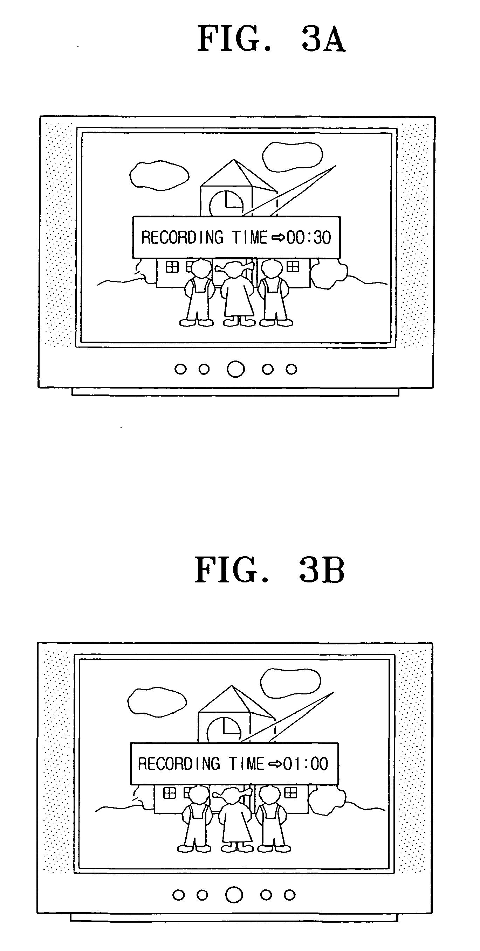

Further descriptions are made of the method of automatically limiting the settable recording time at the recording apparatus with reference to Figures 2 and 3A through Figure 3E.

Figures 3A through 3E depict the OSD-processed information (hereinafter, referred to as OSD information) displayed on the TV screen in order when the user sets the recording time using the recording button 135 according to the OTR feature, given that the recordable time 1: 30 is obtained at operation S210.

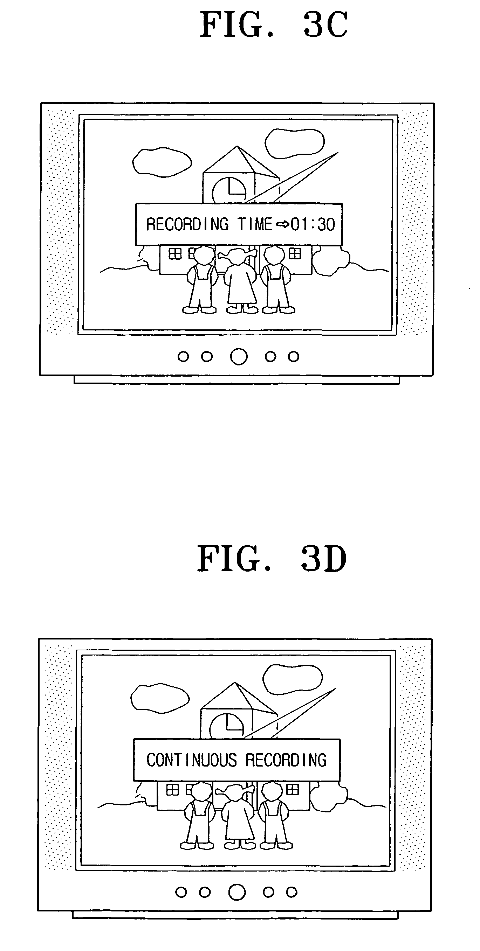

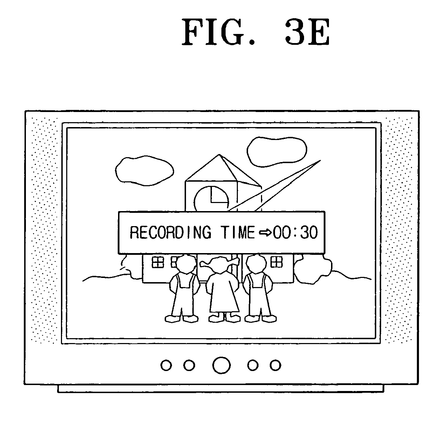

As shown in Figures 3A through 3E, the OSD information displayed on the TV screen is changed from 'recording time ⇒ 0:30' (Figure 3A) → 'recording time ⇒ 1:00' (Figure 3B) → 'recording time ⇒ 1:30' (Figure 3C) → 'continuous recording' (Figure 3D) → 'recording time ⇒ 0:30' (Figure 3E).

Originally, the OSD information on the TV screen in Figure 3D should be 'recording time ⇒ 2:00'. Instead, the OSD information continuous recording is displayed because it is determined that the recording time 2:00 exceeds the recordable time 1:30 at operation S240 in Figure 2. More specifically, the controller 140 processes to record with the recording time unspecified, that is, to set the continuous recording at operation S250 in Figure 2, and controls the OSD processor 150 to OSD-process the information relating to the unspecified recording time at operation S260 in Figure 2.

According to the above-described embodiments of the present invention, it is possible to automatically limit the recording time set by the user to below the recordable time of the recording medium. Accordingly, as the user cannot set the recording time over the recordable time of the recording medium, the above-described embodiments of the present invention can prevent the user's desired input video from being unrecorded as a whole. Furthermore, the OSD information enables the user to perceive that it is impossible to record the entire input video for the user's set recording time, and to know the recordable time of the loaded recording medium.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A recording apparatus, comprising:
a user interface (130) to receive a recording duration command;
a recorder (110) recording a received input video onto a loaded recording medium;
a calculator (120) calculating an available recording time of the recording medium;
an on-screen display (OSD) processor (150) generating and OSD-processing information to be displayed; and
a controller (140) controlling the recorder (110) and the OSD processor (150);
**characterised in that**:
the controller (140) is arranged to control the recorder (110) and the OSD processor (150) so that, when the received recording duration exceeds the available recordable time, the recorder (110) continuously records the input video with an unspecified duration and information indicating the continuous recording is OSD-processed.

2. The recording apparatus of claim 1, wherein the user interface (130) is a manipulation panel (130) or a remote control.

3. The recording apparatus of claim 1 or 2, wherein the user interface (130) includes a recording button (135) to set the recording duration or continuous recording according to a one-touch record (OTR) feature.

4. The recording apparatus of claim 1, 2 or 3, wherein the calculator (120) calculates the recordable time based on a recording area of the recording medium and a predetermined recording speed.

5. The recording apparatus of any of claims 1 to 4, wherein the recording medium is an optical recording medium, a magnetic recording medium, a semiconductor recording medium, a compact disk (CD), a digital video disk (DVD), a hard disk drive (HDD), a tape, or a memory card.

6. A recording method, comprising:
recording (290) a received input video onto a loaded recording medium in response to a received recording duration command;
calculating (210) an available recording time of the recording medium; and
generating (260) and OSD-processing text information to be displayed;
**characterised by**:
controlling (250) a recorder (110) and an OSD processor (150) so that, when the received recording duration exceeds the available recordable time, the recorder (110) continuously records the input video with an unspecified duration and information indicating the continuous recording is OSD-processed.

7. The method of claim 6, wherein the recording time is set according to a one-touch record (OTR) feature.

8. The method of claim 6 or 7, wherein the recordable time is calculated based on a recording area of the recording medium and a predetermined recording speed.

9. The method of claim 6, 7 or 8, wherein for use in a recording apparatus is an optical recorder, a magnetic recorder, a semiconductor recorder, a compact disk recorder (CDR), a digital disk recorder (DVDR), a hard disk drive (HDD) recorder, a video cassette recorder (VCR), or a memory card recorder.

## Patentansprüche

1. Aufzeichnungsvorrichtung, umfassend:
eine Benutzerschnittstelle (130), um einen Aufzeichnungsdauerbefehl zu erhalten;
ein Rekorder (110), der ein empfangenes Eingangsvideo auf ein geladenes Aufzeichnungsmedium aufzeichnet;
einen Rechner (120), der eine verfügbare Aufzeichnungszeit des Aufzeichnungsmediums berechnet;
einen Bildschirmanzeige (OSD) prozessor (150), der anzuzeigende OSD-Verarbeitungsinformationen erzeugt; und
eine Steuerung (140), die den Rekorder (110) und den OSD-Prozessor (150) steuert;
**dadurch gekennzeichnet, dass**
die Steuerung (140) dazu eingerichtet ist, den Rekorder (110) und den OSD-Prozessor (150) so zu steuern, dass der Rekorder (110) dann, wenn die erhaltene Aufzeichnungsdauer die verfügbare aufzeichnungsfähige Zeit überschreitet, das Eingangsvideo fortlaufend mit einer unbestimmten Dauer aufzeichnet, und Informationen, die die fortlaufende Aufzeichnung angeben, OSD-verarbeitet werden.

2. Aufzeichnungsvorrichtung nach Anspruch 1, wobei die Benutzerschnittstelle (130) ein Bedienungsfeld (130) oder eine Fernsteuerung ist.

3. Aufzeichnungsvorrichtung nach Anspruch 1 oder 2, wobei die Benutzerschnittstelle (130) eine Aufzeichnungstaste (135) beinhaltet, um die Aufzeichnungsdauer oder die fortlaufende Aufzeichnung gemäß einem Eintastendruck-Aufzeichnungs(OTR)merkmal einzustellen.

4. Aufzeichnungsvorrichtung nach Anspruch 1, 2 oder 3, wobei der Rechner (120) die aufzeichnungsfähige Zeit auf Basis eines Aufzeichnungsbereichs des Aufzeichnungsmediums und einer vorbestimmten Aufzeichnungsgeschwindigkeit berechnet.

5. Aufzeichnungsvorrichtung nach einem der Ansprüche 1 bis 4, wobei das Aufzeichnungsmedium ein optisches Aufzeichnungsmedium, ein magnetisches Aufzeichnungsmedium, ein Halbleiteraufzeichnungsmedium, eine Compact Disk (CD), eine digitale Videodisk (DVD), ein Festplattenlaufwerk (HDD), ein Band oder eine Speicherkarte ist.

6. Aufzeichnungsverfahren, umfassend:
Aufzeichnen (290) eines empfangenen Eingangsvideos auf ein geladenes Aufzeichnungsmedium als Reaktion auf einen erhaltenen Aufzeichnungsdauerbefehl;
Berechnen (210) einer verfügbaren Aufzeichnungszeit des Aufzeichnungsmediums; und
Erzeugen (260) und OSD-Verarbeiten von anzuzeigenden Textinformationen;
**gekennzeichnet durch**
derartiges Steuern (250) eines Rekorders (110) und eines OSD-Prozessors (150), dass der Rekorder (110) dann, wenn die erhaltene Aufzeichnungsdauer die verfügbare aufzeichnungsfähige Zeit überschreitet, das Eingangsvideo fortlaufend mit einer unbestimmten Dauer aufzeichnet, und Informationen, die die fortlaufende Aufzeichnung angeben, OSD-verarbeitet werden.

7. Verfahren nach Anspruch 6, wobei die Aufzeichnungszeit gemäß einem Eintastendruck-Aufzeichnungs (OTR) merkmal eingestellt wird.

8. Verfahren nach Anspruch 6 oder 7, wobei die aufzeichnungsfähige Zeit auf Basis eines Aufzeichnungsbereichs des Aufzeichnungsmediums und einer vorbestimmten Aufzeichnungsgeschwindigkeit berechnet wird.

9. Verfahren nach Anspruch 6, 7 oder 8, wobei in einer Aufzeichnungsvorrichtung ein optischer Rekorder, ein magnetischer Rekorder, ein Halbleiterrekorder, ein Compact-Disk-Rekorder (CDR), ein Digitaldisk-Rekorder (DVDR), ein Festplatten(HDD)rekorder, ein Videorekorder (VCR) oder ein Speicherkartenrekorder verwendbar ist.

## Revendications

1. Appareil d'enregistrement, comprenant :
une interface utilisateur (130) pour recevoir une commande de durée d'enregistrement;
un dispositif d'enregistrement (110) enregistrant une vidéo d'entrée reçue sur un support d'enregistrement chargé ;
un calculateur (120) calculant un temps d'enregistrement disponible du support d'enregistrement ;
un processeur d'affichage à l'écran (OSD) (150) générant et traitant par OSD des informations à afficher ; et
un contrôleur (140) commandant le dispositif d'enregistrement (110) et le processeur OSD (150) ;
**caractérise en ce que** :
le contrôleur (140) est agencé pour commander le dispositif d'enregistrement (110) et le processeur OSD (150) de telle sorte, lorsque la durée d'enregistrement reçue dépasse le temps d'enregistrement disponible, que le dispositif d'enregistrement (110) enregistre de manière continue la vidéo d'entrée avec une durée non spécifiée et des informations indiquant que l'enregistrement continu est traité par OSD.

2. Appareil d'enregistrement selon la revendication 1, dans lequel l'interface utilisateur (130) est un panneau de manipulation (130) ou une commande à distance.

3. Appareil d'enregistrement selon la revendication 1 ou 2, dans lequel l'interface utilisateur (130) inclut un bouton d'enregistrement (135) pour fixer la durée d'enregistrement ou un enregistrement continu selon une caractéristique d'enregistrement immédiat (OTR).

4. Appareil d'enregistrement selon l'une quelconque des revendications 1, 2 ou 3, dans lequel le calculateur (120) calcule le temps d'enregistrement sur la base d'une zone d'enregistrement du support d'enregistrement et d'une vitesse d'enregistrement prédéterminée.

5. Appareil d'enregistrement selon l'une quelconque des revendications 1 à 4, dans lequel le support d'enregistrement est un support d'enregistrement optique, un support d'enregistrement magnétique, un support d'enregistrement à semi-conducteurs, un disque compact (CD), un disque vidéo numérique (DVD), un disque dur (HDD), une bande, ou une carte mémoire.

6. Procédé d'enregistrement, comprenant :
l'enregistrement (290) d'une vidéo d'entrée reçue sur un support d'enregistrement chargé, en réponse à une commande de durée d'enregistrement reçue ;
le calcul (210) d'un temps d'enregistrement disponible du support d'enregistrement ; et
la génération (260) et le traitement par OSD d'informations de texte à afficher ;
**caractérisé par** :
la commande (250) d'un dispositif d'enregistrement (110) et d'un processeur OSD (150) de telle sorte, lorsque la durée d'enregistrement reçue dépasse le temps d'enregistrement disponible, que le dispositif d'enregistrement (110) enregistre de manière continue la vidéo d'entrée avec une durée non spécifiée et des informations indiquant que l'enregistrement continu est traité par OSD.

7. Procédé selon la revendication 6, dans lequel le temps d'enregistrement est fixé selon une caractéristique d'enregistrement immédiat (OTR).

8. Procédé selon la revendication 6 ou 7, dans lequel le temps d'enregistrement est calculé sur la base d'une zone d'enregistrement du support d'enregistrement et d'une vitesse d'enregistrement prédéterminée.

9. Procédé selon l'une quelconque des revendications 6, 7 ou 8, dans lequel un dispositif d'enregistrement optique, un dispositif d'enregistrement magnétique, un dispositif d'enregistrement à semi-conducteurs, un dispositif d'enregistrement de disque compact (CDR), un dispositif d'enregistrement de disque numérique (DVDR), un dispositif d'enregistrement sur disque dur (HDD), un dispositif d'enregistrement sur cassette vidéo (VCR), ou un dispositif d'enregistrement sur carte mémoire est destiné à être utilisé dans un appareil d'enregistrement.
